# EUROPEAN PATENT APPLICATION

(11) **EP 2 104 310 A1**
(43) Date of publication of application: **23.09.2009**
(21) Application number: 08300152.9
(22) Date of filing: 21.03.2008
(51) Int. Cl.: H04L 29/06

(54) **System and method for compressing packets in point to point communication**

(71) Applicant: Alcatel Lucent, 75008 Paris (FR)
(72) Inventor: De Blasio, Giuseppe, 00135, ROMA (IT); Barzaghi, Giorgio, 20056 Grezzago (IT)
(74) Representative: Shamsaei Far, Hassan

(57) **Abstract**

System and method for compressing packets in radio communication wherein at transmission, a first packet is transmitted having a first header and a first label, the label having a type associated to a flow type of said first packet, a second packet is transmitted without a replaceable portion and with a label being of the same type as that of the first label. At reception the first packet is received and the data related to the association of the label type with the flow type is stored in a data repository. Then the second packet is received and the flow type associated with the type of the label is identified. Next the replaceable portion corresponding to the identified flow type is added to the packet and the label is removed from said packet.

## Description

The present invention relates to the technique of compressing packets in point to point communication. The invention is applicable in particular to point to point radio communication in which packets are transmitted and more in particular to point to point microwave communication in which packets are transmitted.

### BACKGROUND OF THE INVENTION

In communication environments where bandwidth is a limited resource, in particular in radio communication, there is a general desire to optimize the use of the available bandwidth. In radio communication, the bandwidth is granted under license to users, such as telecommunications operators, so as to use a specific, available bandwidth capacity assigned to the licensee. As it is well known, license fees are quite costly and therefore the operators paying such fees are in general interested in taking maximum advantage of the capacity paid for. As a consequence, in an effort to optimize the bandwidth usage, operators may tend to attempt to transmit as much data as possible within the same available radio capacity.

However, the resources are not always efficiently used. For example, in microwave links or in networks where the radio bandwidth is a scarce resource, when microwave is used to transport packet traffic (such as Ethernet traffic) instead of TDM traffic, redundant information is present in the header of the packets, causing certain amount of capacity to remain unused or not efficiently used. Also the known types of encapsulation used for transporting data, for example the so-called Generic Framing Procedure (GFP) as defined by ITU-T G.7041 are not optimized as regards capacity usage. These factors give rise to substantial waste in bandwidth capacity, thus reducing the net throughput over the radio link.

Furthermore, some existing solutions typically use a specific protocol to exchange information between the two end points of transmission link where the compression is performed, or alternatively the compression is performed only on well-specified packets. This would require to know in advance, the type of traffic to be transmitted and thus to configure the equipment accordingly. However, it is not always easy to know in advance the type of traffic and even if known, the associated configurations would involve extra work. One reason may be that in order to implement the compression of packets, some type classification of the packets at the ingress side is needed and the criteria of classification have to be configured.

In the effort to optimize the use of the available bandwidth, one known approach is that of compressing the packets to be transmitted. This technique is based on reducing the size of the packet, usually the header of the packet, for example by dropping a predefined number of bits.

### DESCRIPTION OF THE INVENTION

The invention proposes the use of a compression approach according to which the size of the packet is reduced by replacing the header, or a part of the header, and preferably also the encapsulation overhead before transmission over the radio link. In the direction of transmission, a transmitter equipment replaces all or a part of the packet header, and preferably the overhead, with a label, the label being of a smaller size as compared to the header, or a part of the header (and optionally the overhead) which is replaced. The packet with this new structure is then transmitted towards a receiver.

At the reception side, a receiver equipment replaces the label included in the incoming packet with the parts of the packet which were replaced at the transmission side in order to bring the packet back in its original structure prior to transmission. Such parts which were replaced are the original header, or part of the original header and optionally the overhead, as the case may be.

As already mentioned above, the label is of a smaller size as compared to the portion of the packet which is replaced. In this manner, the overall size of the packet is reduced before transmission and thus from a transmission capacity point of view the transmission obtains an improvement in bandwidth efficiency.

In order to maintain simplicity in the description, the part of the packet that is replaced by the label, namely the header, or a part of the header and optionally the overhead, as the case may be, will be hereinafter referred to indistinctly as the "replaceable portion".

In order to perform the operation of replacement of the replaceable portion with a label (at transmission side), an association is made between a flow type and a label type. This association procedure is also used in the reverse operation, namely the replacement of the label with the replaceable portion (at reception side). The term "flow type" represents the type of traffic for example, in general terms, voice, data, streaming media, protocol, ports, addresses, priority (i.e. IP DiffServ, Ethernet 802.1 p, MPLS Exp) and physical port. This means that for a specific type of flow a specific type of label is designated and associated to the flow type as will be described in further detail below. Furthermore, each flow type may relate to one or more header type or header value.

The terms "header type" relate to the type of a header as a whole, indicative for example of the structure of the header, the information contained therein and the like, whereas the terms "header value" relate to a specific value in a header for example a predefined field, in terms of position in the header.

There may exist, a plurality of header values or header types which are identified by one and the same flow type, in which case only one label type would be sufficient to associate to the flow type. Alternatively, there may exist a plurality of header types or header values each identifying a corresponding flow type, meaning that there may exist as many flow types as header type or header values. In this latter case, it would be required to use as many label types as there are flow types, each label type being associated to a flow type.

As a further example, headers containing identical fields in predefined positions can be considered to correspond to one and the same flow type and thus be replaced by the same type of label.

Accordingly it is a first object of the present invention to provide a method for transmitting compressed packets in point to point communication comprising the steps of
- transmitting a first packet having a first replaceable portion and a first label, the label having a type associated to a type of flow corresponding to said first packet,
- transmitting at least a second packet having the same type of flow as the first packet and without a header, the second packet having a label of the same type as that of the first label.

According to an aspect of the invention the replaceable portion comprises a header or a part of a header and optionally an overhead.

According to another aspect of the invention, the method further comprises the steps of
- receiving the first packet having the replaceable portion and the first label,
- storing data related to the association of the label type with the flow type in a data repository
- receiving the at least second packet,
- identifying a flow type associated with the type of the label of the second packet,
- adding to the at least second packet, a replaceable portion corresponding to the flow type identified as associated to the label type, and removing the label from said packet.

Another object of the present invention is that of providing a transmitter for transmitting compressed packets in point to point communication comprising:
- means for transmitting a first packet having a first replaceable portion and a first label, the label having a type associated to a type of flow corresponding to said first packet,
- means for transmitting at least a second packet having the same type of flow as the first packet and without a header, the second packet having a label of the same type as that of the first label.
   A further object of the invention is that of providing a receiver for receiving compressed packets in point to point communication comprising:

- means for receiving a first packet having a replaceable portion and a first label having a type associated to a flow type of the packet and at least a second packet without the replaceable portion and a label being of the same type as the first label,
- means for identifying a flow type associated with the type of the label of the second packet,
- means for adding to the at least second packet, a replaceable portion corresponding to the flow type identified as associated to the label type, and removing the label from said packet.

The invention further provides a point to point communication system comprising the transmitter and the receiver of the invention as well as a telecommunications network comprising the point to point communication system of the invention.

The invention further provides a computer program, for carrying out one or more of the steps of the method of the invention when the program is run on a computer, an ASIC, an FPGA or a microprocessor as well as a computer readable storage means containing program code means for the implementation of one or more steps of the method of the invention when the program is run on a computer, an ASIC, an FPGA or a microprocessor.

Preferably, the point to point communication is radio communication and more preferably the point to point communication is microwave radio communication.

These and further features and advantages of the present invention are described in more detail in the following description as well as in the claims with the aid of the accompanying drawings.

### BRIEF DESCRIPTION OF THE DRAWINGS

Figure 1 is a schematic representation of an exemplary communication system with a transmitter side and a receiver side adapted for communicating between each other through radio, the figure representing a first transmission-reception scenario according to the invention.
Figure 2 is related to the system of figure 2, representing a second transmission-reception scenario according to the invention.

### EXAMPLES OF PREFERRED EMBODIMENTS

In the embodiments described hereinbelow, reference is made to point to point microwave radio communication. It is to be noted however the described embodiments are to be considered in all respects only as illustrative and not restrictive. As already stated further above, the invention is also applicable to other types of point to point communication, be it through radio or wireline communication, as long as such applications fall within the scope of the present invention.

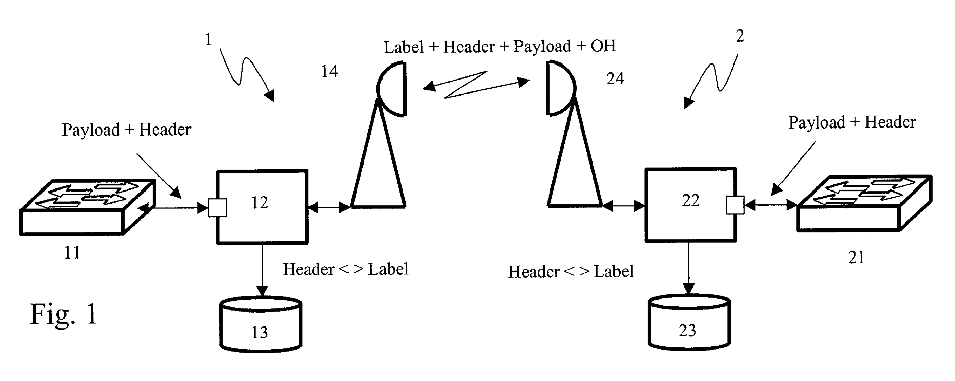

Referring now to figure 1, there is shown a transmitter side 1 and a receiver side 2 adapted to communicate with each other through radio communication.

These sides are hereinafter called "transmitter" and "receiver" respectively only with the aim of simplifying the description of the invention, and those skilled in the art realize that communication between these two sides may be bi-directional, thus either side being capable of transmitting and receiving.

The transmitter side 1 comprises conventional equipment 11 for packet based wireline transmission. It is assumed that packets are transmitted from or received by this equipment in their conventional format, typically having a payload, a header and an overhead, although more complex formats may also be used within the scope of the present invention.

Packets are therefore input from this equipment 11 to a microwave packet radio interface 12.

When the first packet is received by the microwave packet radio interface 12, the flow type of the packet is identified and associated to a type of label. Such label having a type associated to the identified flow type is then added to the packet.

A label may comprise any convenient number of bits sufficient to be used for identification purposes.

The information related to the association of the label and the flow type of the packet is stored in a data repository 13, such as for example a database. The information may be stored for example in the form of a look-up table providing correspondence between a flow type and a label type associated to that particular flow type.

The first packet is then transmitted by means of an outdoor unit 14. This packet comprises typically a payload, a header, an overhead and, in this case, the label which has been added to the rest of the structure of the packet. Therefore, at this stage the label is simply added to the packet without replacing any specific replaceable portion, thus meaning that the first packet in not compressed.

At the reception side 2, an outdoor unit 24 receives the packet with the label added thereto and feeds it to a microwave packet radio interface 22. Once the packet with the label is received by the microwave packet radio interface 22, the information related to the association of the type of the label with the corresponding type of the flow is stored in a data repository 23 such as a database. Here again the information may be stored for example in the form of a look-up table. Once the information on the association of the label type and the flow type is stored, the label is removed and the packet, now in its original format is transmitted towards the rest of the packet based equipment 21 for further processing.

It is understood that the data repositories 13 and 23 may be linked in any convenient manner so as to share, or have access to, the required information on the association of flow types and label types. In fact, it is possible to use only one repository to and from which both the transmitter side 1 and the receiver side 2 input and extract information. In that case, the data repository can be shared by all the microwave packet radio interfaces and it can be accessed using a suitable protocol. Alternatively each microwave packet radio interface 12, 22 may be linked to a local repository containing only the associations related to the label types managed by that microwave packet radio interface.

Figure 1, therefore represents a scenario for transmitting a first packet. It is to be noted that when reference is made in this description to the "first" packet, it is meant to refer to a first one of a plurality of packets to be transmitted in a transmission sequence. If the transmission is interrupted, for whatever reason, and re-initiated subsequently, the "first" packet is understood to be the first one transmitted in the subsequent transmission sequence if the new transmission contains flows which are different from those of the previous transmission. However, if the new transmission contains the same flows as those of the previous transmission, it would not be needed to transmit the "first" packet in not compressed form, because the two microwave packet radio interfaces already know the corresponding association.

Likewise, reference in the following to "subsequent" packets is meant to refer to the packets to be transmitted after the "first" packet, which all together comprise the plurality of packets to be transmitted in a transmission sequence.

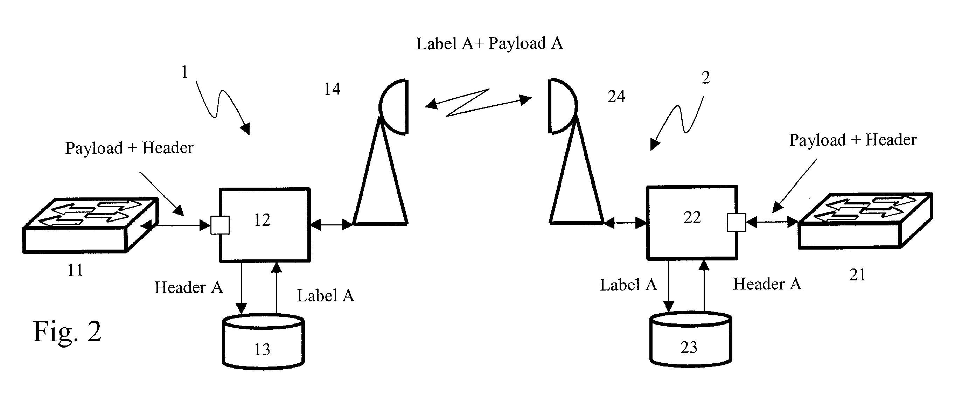

Figure 2, represents a scenario corresponding to the transmission of the "subsequent" packets.

In figure 2, like elements have been given like reference numerals as those of figure 1. Referring to figure 2, packet based transmission equipment 11 inputs packets into the microwave packet radio interface 12. The packets are received in their conventional format typically having a payload, a header and an overhead. At the microwave packet radio interface 12, the flow of the packet is identified as to its type and the corresponding replaceable portion is dropped from the packet. The identification of the type of the flow allows for identifying a suitable label type corresponding to the type of the flow. This is done by consulting the data repository 13 and selecting the type of label which was already registered as corresponding to the type of flow identified from the incoming packet. The identified label is then added to the packet thus forming a new structure for the packet to be transmitted (which is now without the replaceable portion).

As the size of the label is selected to be substantially lower than the size of the replaceable portion, the overall size of the packet, with its new structure becomes smaller than that of the packet in its original structure. The resulting packet, having a reduced size is then transmitted through air by means of the outdoor unit 14.

At the reception side 2, the outdoor unit 24 receives the packet having a reduced size and feeds it into the microwave packet radio interface 22. At this stage, the label is used in order to find the associated flow type and thus to identify the replaceable portion to be added to the packet. To do so, the data repository 23 is consulted and the associated flow type is found from the information available (already registered during the reception of the first packet) in the data repository, for example by searching in the look-up table. Once the associated flow type is found, the corresponding replaceable portion is added to the payload of the packet and the label is dropped, thus reconstructing the original packet that was meant to be transmitted from the transmitted side.

The procedure as described in relation to figure 2 is repeated as many times as necessary in order to transmit the subsequent packets which are intended to be transmitted in a transmission sequence.

As already mentioned above, the type of the label should correspond to the type of the flow of the packet. Therefore, if all the packets to be transmitted in a transmission process have the same format, meaning that their flows are of the same type, the same type of label is used for their transmission in reduced size (compressed form). On the other hand, should a packet have a different flow type as compared to those of the previous packet or packets intended to be transmitted, then a different type of label is created and associated to that different that flow type. In such case, the procedure of transmitting a "first" packet and then transmitting the subsequent packets of the same type is followed as described in relation to figures 1 and 2 respectively.

Thus according to the solution provided by the present invention, significant efficiency in transmission is achieved due to the fact that the length of the label is selected to be lower than the length of the replaceable portion of the packet. In many practical scenarios, where the length of the packet's header is comparatively long and the number of different flow types is low, the compression efficiency reachable by the proposed solution is, for example, in the range of 1 byte of label length replacing 40 bytes of header length.

Elements such as the packet based transmission equipment 11, 21 or the microwave packet radio interface 12, 22 include blocks which can be hardware devices, software modules or combination of hardware devices and software modules.

This method can be advantageously implemented on a Network Element, including means like an Application Specific Integrated Circuit (ASIC), a Field Programmable Gate Array (FPGA) and/or a microprocessor, and in a preferred embodiment through or together with a software program like Very high speed integrated circuit Hardware Description Language (VHDL) or C programming language. Therefore, it is understood that the scope of the protection is extended to such a program product and in addition to a computer readable storage means having a message therein, such computer readable storage means containing program code means for the implementation of one or more steps of the method of the invention, when this program is run on a computer, an ASIC, an FPGA or a microprocessor.

It is to be noted that the list of structures corresponding to the claimed means is not exhaustive and that one skilled in the art understands that equivalent structures can be substituted for the recited structure without departing from the scope of the invention.

It is also to be noted that the order of the steps of the method of the invention as described and recited in the corresponding claims is not limited to the order as presented and described and may vary without departing from the scope of the invention.

## Claims

1. A method for transmitting compressed packets in point to point communication comprising the steps of:
- transmitting a first packet having a first replaceable portion and a first label, the label having a type associated to a type of flow corresponding to said first packet,
- transmitting at least a second packet having the same type of flow as the first packet and without a header, the second packet having a label of the same type as that of the first label.

2. The method of claim 1, wherein the replaceable portion comprises a header or a part of a header and optionally an overhead.

3. The method of claim 1 or 2, wherein an information related to the association of the label type and the flow type of the packet is stored in a data repository.

4. The method according to any one of the previous claims wherein the method further comprises the steps of:
- receiving the first packet having the replaceable portion and the first label,
- storing data related to the association of the label type with the flow type in a data repository,
- receiving the at least second packet,
- identifying a flow type associated with the type of the label of the second packet,
- adding to the at least second packet, a replaceable portion corresponding to the flow type identified as being associated to the label type, and removing the label from said second packet.

5. The method according to claim 4 wherein the identification of the flow type associated with the type of the label is performed by consulting a data repository (23).

6. The method according to any one of the previous claims comprising the step of changing, at a transmission side, the structure of the at least a second packet from a first structure comprising a payload and a replaceable portion to a second structure comprising a payload and a label without the replaceable portion.

7. The method according to claim 6, wherein the type of the flow of the packet is identified in the first structure of the at least a second packet, and the replaceable portion is dropped from the packet and wherein the type of the label associated to the identified type of the flow is identified and the label is added to the packet.

8. The method according to claim 7, wherein the identification of the type of the flow and the type of the label is performed by consulting the data repository (13).

9. The method according to any preceding claim wherein a size of the label is substantially lower than a size of the corresponding replaceable portion of the associated flow type.

10. The method according to claim 6 comprising the step of changing, at a reception side, the structure of the second packet from the second structure comprising a payload and a label to the first structure comprising a payload and a replaceable portion.

11. The method according to claim 10, wherein the type of the label of the packet is identified in the second structure of the second packet, and the label is dropped from the packet and wherein the type of the flow associated to the identified type of the label is identified and the replaceable portion corresponding to the identified flow type is added to the packet.

12. The method according to claim 7, wherein the identification of the type of the label and the type of the flow is performed by consulting the data repository (23).

13. The method according to any one of the previous claims wherein the point to point communication is radio communication.

14. The method according to any one of the previous claims wherein the point to point communication is microwave radio communication.

15. A transmitter for transmitting packets in point to point communication comprising:
- means for transmitting a first packet having a first replaceable portion and a first label, the label having a type associated to a type of flow corresponding to said first packet,
- means for transmitting at least a second packet having the same type of flow as the first packet and without a header, the second packet having a label of the same type as that of the first label.

16. The transmitter of claim 15 wherein the replaceable portion comprises a header or a part of a header and optionally an overhead.

17. The transmitter of claim 15 or 16 comprising a data repository (13) wherein an information related to the association of the label type and the flow type of the packet is stored.

18. The transmitter of any one the of the claims 15 to 17, further comprising means for changing the structure of the at least a second packet from a first structure comprising a payload and a replaceable portion to a second structure comprising a payload and a label.

19. The transmitter according to any of the claims 15 to 18 wherein a size of the label is substantially lower than a size of the replaceable portion.

20. The transmitter according to any one of claims 15 to 19 wherein the point to point communication is radio communication or microwave radio communication.

21. A receiver for receiving compressed packets in point to point communication comprising:
- means for receiving a first packet having a replaceable portion and a first label having a type associated to a flow type of the packet and at least a second packet without the replaceable portion and with a label being of the same type as the first label,
- means for identifying a flow type associated with the type of the label of the second packet,
- means for adding to the at least second packet, a replaceable portion corresponding to the flow type identified as associated to the label type, and removing the label from said packet.

22. The receiver of claim 21 wherein the replaceable portion comprises a header or a part of a header and optionally an overhead.

23. The receiver of claim 21 or 22, comprising means for changing the structure of the second packet from a structure comprising a label to another structure comprising the replaceable portion without the label.

24. The receiver according to any one of the claims 21 to 23, wherein the point to point communication is radio communication or microwave radio communication.

25. A point to point communication system comprising the transmitter of any one of claims 15 to 20.

26. A point to point communication system comprising the receiver of any one of claims 21 to 24.

27. A telecommunications network comprising the point to point communication system of claim 25 or claim 26.

28. A computer program product, for carrying out one or more of the steps of the method of any one of claims 1 to 14 when the program is run on a computer, an ASIC, an FPGA or a microprocessor.

29. A computer readable storage means containing program code means for the implementation of one or more steps of the method of any one of claims 1 to 14 when the program is run on a computer, an ASIC, an FPGA or a microprocessor.
